# EUROPÄISCHE PATENTSCHRIFT

(11) **EP 2 760 943 B1**
(45) Veröffentlichungstag und Bekanntmachung des Hinweises auf die Patenterteilung: **06.07.2016**
(21) Anmeldenummer: 12774912.5
(22) Anmeldetag: 26.09.2012
(51) Int. Cl.: C09D 5/00

(54) **FOLIENBILDENDES BESCHICHTUNSMITTEL**
FILM-FORMING COATING AGENT
AGENT DE REVÊTEMENT FILMOGÈNE

(30) Priorität: 26.09.2011 AT 5262011
(43) Veröffentlichungstag der Anmeldung: 06.08.2014
(73) Patentinhaber: Lengheim, Hubert, 2213 Bockfliess (AT)
(72) Erfinder: Lengheim, Hubert, 2213 Bockfliess (AT)
(74) Vertreter: Sonn & Partner Patentanwälte
(86) Internationale Anmeldenummer: PCT/AT2012/000243
(87) Internationale Veröffentlichungsnummer: WO 2013/044278

(56) Entgegenhaltungen:
- EP-A2- 1 083 207
- WO-A2-01/02496
- WO-A2-01/38447
- WO-A2-2008/036628
- DE-A1- 19 945 626
- US-A- 5 912 297

## Beschreibung

Die vorliegende Erfindung betrifft ein folienbildendes Beschichtungsmittel mit einem Wasseranteil von mindestens 10 Gew.-%, das in getrocknetem Zustand eine wasserdampfdurchlässige ablösbare Folie bildet.

Die aus diesem Beschichtungsmittel gebildete Folie kann erfindungsgemäß zum Gebäudeschutz sowie für einer Ausrüstung zur einfachen Entfernung von Beschmierung (Graffiti) von Mauerwerk aufgebracht werden. Weiters kann die gebildete Folie durch Einarbeitung eines geeigneten Duftstoffes auch zur Abschreckung bzw. Vergrämung von felltragenden Säugetieren, insbesondere von Hunden, dienen.

Unter dem Begriff Mauerwerk, wie er in der vorliegenden Beschreibung und den Ansprüchen verwendet wird, wird ein aus natürlichen oder künstlichen Steinen gefügtes Bauteil oder Bauwerk verstanden, das gegebenenfalls verputzt sein kann.

Bekannt sind wasserdampfdurchlässige mikroporöse Membranen, welche als Unterspann- oder Unterdeckbahnen ihre Anwendung finden. Diese Membranen werden überwiegend aus Polypropylen als geschlossene Folie hergestellt. Das Material der Folie ist dabei anfangs dicht und ohne Poren; um die Anforderungen bzgl. Diffusionsoffenheit zu erfüllen wird in der Produktion der Folie dem Ausgangsmaterial zur Porenbildung Calciumcarbonat zugegeben und die Folie wird dann gestretcht. Die fertige Folie sieht einen Schutz gegenüber von außen eindringendem Wasser vor, weil Wassertropfen zu groß sind und auf Grund ihrer Oberflächenspannung nicht durch die Poren der Folie gelangen können. Andererseits kann Luft durch die Polen hindurch strömen und so Feuchtigkeit (Dampf) durch die Folie nach außen transportieren.

Auch bekannt sind Anti-Graffiti-Folien zum Schutz vor Farbschmierereien auf Schaufenster, Haltestellen, Busse, Bahnen und Schaukästen. Die Anti-Graffiti Folien sind glasklar durchsichtig und wieder ablösbar, sie werden nach der Beschädigung abgezogen und durch eine neue Schutzfolie ersetzt.

Diese bekannten Einrichtungen weisen den Nachteil auf, dass die Folien weder mit einfachen Methoden angebracht, noch bei Bedarf (beispielsweise nach Verschmutzung) einfach und rückstandsfrei mechanisch entfernt werden können.

Aus der JP 8-165444 A ist ein wasserlösliches Beschichtungsmittel bekannt, welches zur Entfernung zwingend durch Wasser abgewaschen, also durch Auflösen abgelöst werden muss.

Die WO 01/38447 A2 und die DE 19 945 626 A1 offenbaren schnell trocknende, wässrige Beschichtungsmittel, bei welchen es sich beispielsweise um Außenputze, Innenputze, Kunstharzputze, Fassadenfarben, Straßenmarkierungsfarben oder Holzschutzfarben bzw. Klebstoffe, Kleister, Kitte, Dichtungsmassen, Druckausgleichsschichten für Wärmedämmverbundsysteme unter dergleichen handelt. In beiden Dokumenten wird zwischen wässrigen Beschichtungsmitteln und Beschichtungsmitteln auf Lösungsmittelbasis unterschieden.

Die EP 1 083 207 A2 betrifft biozide Farbanstriche mit ungelöschtem Kalk als Desinfektionsmittel. Die Beschichtungszusammensetzung muss luftdicht abschließend sein.

Die US 5 912 297 A betrifft eine wässrige harzhältige Beschichtungszusammensetzung zur Verwendung bei der Autodeposition, wodurch Korrosion von metallhaltigen Oberflächen verhindert wird und welche Zusammensetzungen durchgehende Filme bilden, welche geringe Wasserdampf-Durchlässigkeiten aufweisen.

Die WO 2008/036628 A2 betrifft wässrige Beschichtungen für metallische Substrate, wie Konservendosen, um die Wechselwirkung zwischen Lebensmittel oder Getränkeprodukten mit den Metallsubstraten der Behälter zu verhindern bzw. zu verlangsamen.

Die WO 01/02496 A2 betrifft ablösbare Beschichtungen für Substrate, insbesondere Glas, zum Schutz vor mechanischen Beschädigungen während Verarbeitung, Handhabung, Versand oder Lagerhaltung. Die Beschichtung wird durch Abwaschen mit einem geeigneten Lösungsmittel, verbrennen oder thermische Zersetzung entfernt.

Es ist daher eine Aufgabe der vorliegenden Erfindung für den Gebäudeschutz eine möglichst einfache Methode bereit zu stellen, welche die Nachteile der bekannten Folien beseitigt. Die Folie soll wasserdampfdurchlässig sein, mit einfachen Mitteln aufgebracht und mechanisch wieder entfernt werden können sowie gut haften.

Diese Aufgabe wird erfindungsgemäß durch ein folienbildendes Beschichtungsmittel auf Basis einer Polymerdispersion mit einem Wasseranteil von mindestens 10 Gew.-% und mit einem Gehalt an organischem Lösungsmittel von 1 bis 15 Gew.-% gelöst, welches in getrocknetem Zustand eine Folie mit einer Haftzugfestigkeit von mindestens 0,1 N/mm², vorzugsweise mindestens 0,5 N/mm² und einer Dampfdurchlässigkeit von kleiner gleich 25 µ x 25 µ bildet, welche Folie zusätzlich mechanisch ablösbar ist, wobei das organische Lösungsmittel ein polares Lösungsmittel mit einem Siedepunkt zwischen 50-85°C ist und ausgewählt ist aus der Gruppe umfassend Ethanol, Methylethylketon (Butanon), 2-Propanol (Isopropylalkohol), 2-Methyl-2-propanol (tert-Butanol) und Ethylenglycoldimethylether sowie gegebenenfalls Mischungen hievon. Die genannten Lösungsmittel weisen allesamt einen Siedepunkt von zwischen 78 und 84 °C auf und verdunsten somit vor Wasser.

Vorzugsweise weist die Folie im getrockneten Zustand eine Festigkeit von mindestens 20 N/mm² auf.

Das Beschichtungsmittel wird in flüssigem Zustand auf das zu beschichtende Mauerwerk aufgebracht und bildet nach seiner Trocknung eine Folie, die einfach, ohne nennenswerten Kraftaufwand und rückstandsfrei wieder abgezogen werden kann. Die Polymer-Dispersion weist einen Wasseranteil von mindestens 10% auf und kann bei Bedarf mit Wasser weiter verdünnt werden. Beschichtungsmittel auf Basis von Lösungsmitteln könnten die oben genannte Aufgabe auch lösen, aus ökologischen Gründen wird jedoch Wasser bevorzugt. Durch das Verdampfen des in Beschichtungsmittel vorgesehenen organischen Lösungsmittel werden während des Trocknens der Folie Poren vorgesehen, welche die Dampfdurchlässigkeit der Folie in getrocknetem Zustand vorsehen. Die aus dem erfindungsgemäßen Beschichtungsmittel hergestellten fertigen Folien sind bei einer Dicke von rund 1 mm wasserdicht aber dampfdurchlässig und haben vorzugsweise einen Diffusionswiderstand von mindestens 0,2 m (der Sd-Wert ist eine vergleichende Angabe, welche die Dicke der ruhende Luftschicht angibt, die denselben Diffusionswiderstand aufweist wie das betrachtete Bauteil).

Gemäß einer bevorzugten Ausführungsform der vorliegenden Erfindung sind die organischen Lösungsmittel im folienbildenden Beschichtungsmittel in einer Konzentration von 1 bis 12 % w/w, vorzugsweise von 2 bis 4 % w/w enthalten, wodurch gleichzeitig eine Folienbildung während des Trocknens ermöglicht und Poren in der fertigen Folie vorgesehen werden. Die Konzentrationsbereiche wurden durch Beobachtung während der Folienbildung mittels eines Mikroskops ermittelt.

Erfindungsgemäß bildet das Beschichtungsmittel nach dessen Trocknung eine rückstandsfrei und leicht abziehbare Folie. Diese Eigenschaft der Folie wird mittels eines dem Beschichtungsmittel zugefügten Trennmittels verstärkt. Das Trennmittel ist vorzugsweise aus der Gruppe umfassend mehrwertige Alkohole, synthetische Trennmittel und Tenside, sowie Kombinationen hiervon, ausgewählt. Als beispielhafte Vertreter wurden Glycerin in 99% PhEur Qualität aus der Gruppe der mehrwertigen Alkohole, Silikonöle aus der Gruppe der synthetischen Trennmittel, und modifizierte, mehrwertige, aliphatische Alkohole, insbesondere Glycerinethoxylat, aus der Gruppe der Tenside erfolgreich getestet. Die Eigenschaft der leichten Abziehbarkeit wurde sowohl subjektiv als auch objektiv beurteilt, entsprechende Versuchsergebnisse werden in den Beispielen angegeben.

Gemäß einer weiteren Ausführungsform der vorliegenden Erfindung enthält das Beschichtungsmittel weiters ein Entschäumungsmittel, um auf der zu beschichtenden Oberfläche einen gleichmäßigen Film ohne Lufteinschlüsse zu bilden und gegebenenfalls Transparenz zu gewährleisten. Die Beimengung von Entschäumungsmitteln, um transparente, selbstklebende und abziehbare Folien zu erhalten, ist dem Fachmann bekannt und wird deshalb hier nicht weiter erörtert. Als erfindungsgemäßes Beispiel eines Entschäumungsmittels wurde das Produkt Silfoam^{®} SE 57 (Wacker Chemie AG, Deutschland) erfolgreich getestet.

Gemäß einer weiteren Ausführungsform der Erfindung enthält das Beschichtungsmittel weiters ein Korrosionsschutzmittel, um metallische Untergründe (z.B. metallische Fensterrahmen oder Fassadenelemente) vor Korrosion zu schützen, die gemäß einer der Ausführungsformen der Erfindung mit dem Trennmittel, das mehrwertigen Alkohol aufweisen kann, in Kontakt kommen können. Als erfindungsgemäßes Beispiel eines Korrosionsschutzmittels wurde das Produkt POLYGON PCG 1909 (POLYGON CHEMIE AG, Schweiz), ein Korrosionsinhibitor für Eisen, Stahl und Buntmetalle in sauren nicht oxidativen Medien, erfolgreich getestet.

Gemäß noch einer Ausführungsform der vorliegenden Erfindung enthält das Beschichtungsmittel weiters Pigmente. Die aus dem erfindungsgemäßen Beschichtungsmittel hergestellte Folie kann somit durch gezielte Beimengung von Pigmenten auch mit einem Farbton versehen werden.

Gemäß einer weiteren Ausführungsform der vorliegenden Erfindung ist die Polymer-Dispersion eine Kombination von mindestens zwei Polymer-Dispersionen. Der Vorteil von zumindest einer zweiten Polymer-Dispersion ist, dass die rascher abbindende der beiden Komponente über dem Trennmittel eine permanente Abbindung mit dem Mauerwerk verhindert, da die andere Komponente erst nach der ersten aushärtet. Ferner ist die mindestens zweite Polymer-Dispersion als Anreibemedium für Pigmente geeignet und gewährleistet verbesserte Bewitterungsstabilität.

Als erfindungsgemäßes Beispiel einer kombinierten Polymer-Dispersion wurde das eine wässrige Polymer-Dispersion auf Basis von Vinylacetat, Ethylen und Methacrylsäureestern (Mowilith^{®} LDM 1865 von Celanese Corporation, USA) erfolgreich getestet, weiters zeigte auch eine Vinylacetat-Ethylen Emulsion mit geringem Ethylengehalt (DA 108 H von Perry Chemicals, USA) gute Erfolge.

Die verbesserte Bewitterungsstabilität dieser beispielhaften Polymer-Dispersion wurde in einer SOL 2 Sonnenlicht Testkammer erfolgreich getestet. Hierbei wurde die aus der kombinierten Polymer-Dispersion durch Trocknung entstandenen Folie einem bis zu 6,5 fachen der natürlichen Sonneneinstrahlung ausgesetzt. Ferner wurde die Folie einem Temperaturbereich von -20° C bis +45° C ausgesetzt und ließ sich anschließend rückstandsfrei entfernen.

Die wässrige Polymer-Dispersion lässt sich mit einfachen Mitteln, wie Rollen, Streichen oder Spritzen, in einem Temperaturbereich von 0° C bis 35° C, bevorzugt in einem Temperaturbereich von 10° C bis 25° C auf das Mauerwerk auftragen. In vorteilhafter Weise kann das Auftragen kleinflächig mit einer mit einem Sprühkopf versehenen Sprühflasche erfolgen, die Sprühflaschen können mit Sprühpumpen ausgestattet sein oder ein Treibmittel verwenden. Vorzugsweise hat die endgültige Beschichtung eine Schichtdicke von etwa 1,0 mm bis etwa 3 mm.

Gemäß einer weiteren Ausführungsform der Erfindung umfasst das Beschichtungsmittel zur Abschreckung bzw. Vergrämung von felltragenden Säugetieren, insbesondere von Hunden, geeignete natürliche oder synthetische Repellents. Geeignete Zusammensetzungen, z.B. ätherische Öle, Pflanzenextrakte wie ein Extrakt aus Plectranthus Caninus oder ein synthetisches Repellent wie Ammoniumalaun (Aluminiumammoniumsulfat-Dodecahydrat) können dabei entweder in der wässerigen Phase der Polymer-Dispersion vorgesehen sein oder über das organische Lösungsmittel in das erfindungsgemäße Beschichtungsmittel eingebracht werden. Die letztere Methode hat sich bewährt.

Die Anwendung der Folie bzw. der Beschichtung ist jedoch nicht auf Mauerwerk beschränkt, da die Beschichtung generell alle darunter liegenden porösen Oberflächen vor Verschmutzung jeder Art sowie auch vor bewitterungsbedingten Schäden schützt. Gebäude, Fassaden, Denkmäler und alles schützenswerte wie Statuen, Blechdächer und historische Gebäude etc. die in der Öffentlichkeit durch Umwelteinflüsse und Taubendreck verschmutzt werden können durch die vorliegende Erfindung langfristig geschützt werden. Weiters bietet die vorliegende Erfindung eine hervorragende Möglichkeit zum Schutz von Gebäudesockeln, welche durch Streumaterialien etc. nachhaltig beschädigt werden, da das Eindringen von Wasser wesentlich erschwert wird und dadurch die durch den Frost verursachte Absprengungen des Mauerwerkes und die dadurch durchzuführenden jährlichen Ausbesserungsarbeiten wesentlich verringert werden.

Auch wenn voranstehend einige Beispiele aufgezählt wurden, ist es für den Fachmann nachvollziehbar, dass die Anwendungsmöglichkeiten auch andere, nicht aufgezählte Bereiche betreffen können.

Der Gegenstand der vorliegenden Erfindung wird durch die nachfolgenden Beispiele näher erläutert.

Folgende Lösungsmittel wurden in die Testreihe eingebunden

| **Lösungsmittel** | **Siedepunkt (°C)** | **Dichte (g/ml** |
|---|---|---|
| Ethanol | 78,3 | 0,7893 |
| Methylethylketon (Butanon) | 79,6 | 0,8054 |
| 2-Propanol (Isopropylalkohol) | 82,3 | 0,7855 |
| 2-Methyl-2-propanol (tert-Butanol) | 82,5 | 0,7887 |
| Ethylenglycoldimethylether | 84 | 0,8628 |

Bei den einzelnen Zugaben zu der Grundmatrix, einer kombinierten Polymer-Dispersion (Mowilith^{®} LDM 1865 der Celanese Corporation, USA), wurde ein maximaler Anteil ermittelt, welche eine Folienbildung zulässt, aber gleichzeitig Poren öffnet. Die Öffnung dieser Poren wurde durch Betrachtung unter dem Mikroskop festgestellt.

Die einzelnen Maximalkonzentrationen wurden wie folgt festgehalten

| **Lösungsmittel** | **Zugabe min % w/w** | **Zugabe max % w/w** |
|---|---|---|
| Ethanol | 2 | 12 |
| Methylethylketon (Butanon) | 1 | 12 |
| 2-Propanol (Isopropylalkohol) | 2 | 12 |
| 2-Methyl-2-propanol (tert-Butanol) | 2 | 12 |
| Ethylenglycoldimethylether | 2 | 15 |

Es wurde jeweils die Grundmatrix des erfindungsgemäßen Beschichtungsmittels mit dem entsprechenden Lösungsmittel versetzt. Auf einer 10 x 10 cm Glasscheibe als Prüffläche wurde die Folienfestigkeit und das Abziehvermögen geprüft. Dazu wurde ein etwa 1 mm dicker Film aufgebracht, nach 2 Stunden Trocknungszeit wurde dieser an einer Ecke abgezogen. Der Test galt als bestanden, wenn sich die Folie ohne zu reißen ablösen lies. Bei steigenden Lösungsmittelzugaben litt die Reißfestigkeit, daher wurden auch die entsprechenden Obergrenzen definiert. Die besten Ergebnisse wurden in der Versuchsserie bei dem Einsatz von Ethanol erzielt, ein derartiges Beschichtungsmittel mit einer kombinierten Polymer-Dispersion (Mowilith^{®} LDM 1865 der Celanese Corporation, USA), als Grundmatrix und 2 % Ethanol wurde bei den nachfolgenden Untersuchungen verwendet.

### Prüfungen auf Putzmörtel

### Herstellung der Probekörper

Für die Herstellung der Probekörper wurden folgende Putzmaterialien herangezogen und folgende Eigenschaften der aus dem verwendeten Beschichtungsmittel hergestellten Folie ermittelt:
Saniergrundputz: kapillare Wasseraufnahme und Wassereindringung,
Sanierputzmörtel N: Wasserdampfdurchlässigkeit,
Sanierputzmörtel L: Wärmeleitfähigkeit,
Sockelputzmörtel: Ermittlung der Haftzugfestigkeiten.

Der Trockenmörtel wurde jeweils in so viel Wasser (Wassertemperatur 20°C) eingestreut und gemischt, dass sich eine augenscheinliche Konsistenz des Frischmörtels ergab. Der Mischvorgang erfolgte in einem Labormischer bzw. Freifallmischer. Die Konsistenz wurde nach ÖNORM EN 1015-3, der Luftporengehalt gemäß ÖNORM EN 1015-7 und die Frischmörtel-Rohdichte im zylindrischen Messtopf mit 1 dm3 Inhalt (1 1-Luftporentopf) bestimmt.

**Tabelle 1: Frischmörtel-Daten**

| | Grundputz | Putzmörtel N | Putzmörtel L | Sockelputz |
|---|---|---|---|---|
| Wassermenge | 640 cm³ | 650 cm³ | 20,5 l | 530 cm³ |
| Wasseranspruch | 32,0 M-% | 32,5 M-% | 113,9 M-% | 26,5 M-% |
| Ausbreitmaß | 169 mm | 173 mm | 180 mm | 172 mm |
| Frischmörtel-Rohdichte (kg/dm³) | 1,239 | 1,094 | 0,871 | 1,403 |
| Luftporengehalt | 30 % | 29 % | 27 % | 26 % |

Die Lagerung der Proben bis zur Beschichtung erfolgte gemäß Tab. 1 der ÖNORM EN 1015-11. Bei der Beschichtung der Probekörper mit dem verwendeten Beschichtungsmittel wurden Mengen von zwischen 1500 und 2500 g/m² aufgetragen.

### Kapillare Wasseraufnahme und Wassereindringung

Die Bestimmung der kapillaren Wasseraufnahme erfolgte nach ÖNORM EN 1015-18 an scheibenförmigen Probekörpern. Die Wassereindringtiefe wurde unmittelbar danach nach Punkt 6.3.7 der WTA-Richtlinie 2-9-04/D bestimmt. Die Prüfungen wurden vergleichsweise an beschichteten und unbeschichteten Probekörpern durchgeführt.

**Tabelle 2:**

| | beschichtet | unbeschichtet |
|---|---|---|
| Wasseraufnahme, kg/m² | 0,31 | 2,63 |
| Wasseraufnahmekoeffizient W24, kg/(m²h0,5) | 0,063 | 0,536 |
| Wassereindringtiefe, mm | 0-3 | 5 |

Durch die Beschichtung mit dem verwendeten Beschichtungsmittel ist eine deutliche Verringerung der kapillaren Wasseraufnahme und der Wassereindringtiefe festzustellen. Die Folie ist nach den Prüfungen manuell abziehbar. Die Folie weist keine augenscheinlich erkennbaren Veränderungen, z.B. Risse, Versprödung, Ablösungen, Blasenbildung oder Verfärbungen, auf.

### Wasserdampfdurchlässigkeit

Der Koeffizient der Wasserdampfdurchlässigkeit (µ-Wert) wurde nach ÖNORM EN 1015-19 bestimmt. Die Prüfungen wurden vergleichsweise an beschichteten und unbeschichteten Probekörpern durchgeführt.

**Tabelle 3:**

| | beschichtet | unbeschichtet |
|---|---|---|
| Wasserdampfdiffusionswiderstandszahl µ | 22,8 | 8,3 |
| Wasserdampfdiffusionsäquivalente Luftschichtdicke sd, m | 0,56 | 0,20 |

Durch den folienbildenden Anstrich wird der Koeffizient der Wasserdampfdurchlässigkeit (µ-Wert) eines Sanierputzes etwas erhöht. Die Anforderungen an Sanierputzmörtel für die Wasserdampfdiffusionswiderstandszahl µ betragen gemäß WTA-Richtlinie 2-9-04/D bzw. ÖNORM B 3345 < 12 bzw. ≤ 12 und gemäß EN 998-1 ≤ 15.

### Wärmeleitfähigkeit

Die Bestimmung der Wärmeleitfähigkeit an beschichteten Putzproben bzw. Platten erfolgte gemäß ÖNORM EN 12664.

**Tabelle 4:**

| | |
|---|---|
| Probendicke | 52,0 mm |
| Rohdichte, trocken | 0,465 kg/dm³ |
| Wärmeleitfähigkeit | 0,110 W/mK |
| Messwert λ (trocken) | |

Die Anforderung an Sanierputzmörtel L für die Wärmeleitfähigkeit λ10tr beträgt gemäß ÖNORM B 3345 ≤ 0,20 W/mK.

### Haftzugfestigkeiten

Die Bestimmungen der Haftzugfestigkeiten erfolgte an den beschichteten Putzproben nach folgenden Beanspruchungen bzw. Lagerungsbedingungen:
1. Lagerung bei Raumbedingungen (Nullversuch),
2. Frost-Tausalz-Belastung, 25 Zyklen,
3. erhöhte UV-Strahlung, 7 Tage und Temperatur, etwa 60 °C und
4. Schlagregen, beschichtet und unbeschichtet, 7 Tage, jeweils über 6 Stunden.

Bei den Haftzugversuchen wurde die verwendete Beschichtung mit 50 mm x 50 mm bzw. einem Durchmesser von 50 mm bis zum Putzuntergrund eingeschnitten (mindestens 3 Proben je Beanspruchung). Anschließend wurden Haftzuganker mit einem Zweikomponentenkleber aufgeklebt, nach Aushärtung des Klebers wurden die Haftzugversuche mit einem mobilen Haftzugprüfgerät (Messbereich: max. 6 kN) durchgeführt.

**Tabelle 6: Haftzugfestigkeiten**

| Beanspruchung | Haftzugfestigkeit N/mm² | Bruchbild | Veränderungen an der Folie |
|---|---|---|---|
| Raumklima (Nullversuch) | 0,82 | 100 % Ablösung der Folie vom Putzuntergrund mit geringen Putzrückständen von der Oberfläche | in einem Stück abziehbar, keine augenscheinlichen Veränderungen |
| | 0,75 | | |
| | 0,61 | | |
| | mittel: 0,73 | | |
| Frost-Tausalz-Belastung, 25 Zyklen | 0,86 | 100 % Ablösung der Folie vom Putzuntergrund mit geringen Putzrückständen von der Oberfläche | in einem Stück abziehbar, keine augenscheinlichen Veränderungen wie z.B. Risse, Versprödung, Ablösungen, Blasenbildung oder Verfärbungen |
| | 0,83 | | |
| | 0,68 | | |
| | mittel: 0,79 | | |
| Erhöhte UV-Strahlung, Temperatur (etwa 60 °C) | 0,78 | 100 % Ablösung der Folie vom Putzuntergrund mit geringen Putzrückständen von der Oberfläche | manuell nicht in einem Stück abziehbar, Folie ist etwas versprödet und vergilbt, sonst keine weiteren augenscheinlich erkennbaren Veränderungen wie z.B. Risse, Ablösungen oder Blasenbildung |
| | 0,74 | | |
| | 0,68 | | |
| | mittel: 0,73 | | |
| Schlagregen | 0,29 | 100 % Ablösung der Folie vom Putzuntergrund mit geringen Putzrückständen von der Oberfläche | in einem Stück abziehbar, keine augenscheinlichen Veränderungen wie z.B. Risse, Versprödung, Ablösungen, Blasenbildung oder Verfärbungen |
| | 0,17 | | |
| | 0,19 | | |
| | mittel: 0,22 | | |

Bei den durchgeführten Beanspruchungen sind an der verwendeten Beschichtung keine Veränderungen bei den Haftzugfestigkeiten auf Putzuntergrund aufgetreten, die Beschichtung wies eine Festigkeit von mehr als 25 N/mm² auf.

Bei den Untersuchungen der verwendeten Beschichtung wurden keine Auswirkungen festgestellt, die die geprüften Eigenschaften
- Kapillare Wasseraufnahme und Wassereindringung,
- Wasserdampfdurchlässigkeit und
- Wärmeleitfähigkeit
der Putzsysteme im Wesentlichen nachteilig beeinflussen.

Nach den Beanspruchungen von Außen durch Frost-Tausalz-Belastung, UV-Strahlung und Schlagregen weist die verwendete Beschichtung im Vergleich zu den Nullversuchen eine unveränderte Haftung auf dem Putzuntergrund auf. Ein mit der verwendeten Beschichtung beschichteter Putzuntergrund bleibt im Wesentlichen wasserdampfdurchlässig. Der Koeffizient der Wasserdampfdurchlässigkeit (µ-Wert) eines Sanierputzes wird etwas erhöht. Die Beschichtung mit der verwendeten Beschichtung bewirkt eine deutliche Verringerung der kapillaren Wasseraufnahme und der Wassereindringtiefe, wodurch bei Beanspruchungen von Außen, z.B. Feuchtigkeit, Frost-Tausalz-Belastung, Schlagregen, der Schutz der Putzuntergründe erhöht wird.

## Patentansprüche

1. Folienbildendes Beschichtungsmittel auf Basis einer Polymerdispersion mit einem Wasseranteil von mindestens 10 Gew.-% und mit einem Gehalt an organischem Lösungsmittel von 1 bis 15 Gew.-%, welches in getrocknetem Zustand eine Folie mit einer Haftzugfestigkeit von mindestens 0,1 N/mm², vorzugsweise mindestens 0,5 N/mm²und einer Dampfdurchlässigkeit von kleiner gleich 25 µ x 25 µ bildet, welche Folie zusätzlich mechanisch ablösbar ist, **dadurch gekennzeichnet, dass** das organische Lösungsmittel ein polares Lösungsmittel mit einem Siedepunkt zwischen 50-85°C ist und ausgewählt ist aus der Gruppe umfassend Ethanol, Methylethylketon (Butanon), 2-Propanol (Isopropylalkohol), 2-Methyl-2-propanol (tert-Butanol) und Ethylenglycoldimethylether sowie gegebenenfalls Mischungen hievon.

2. Beschichtungsmittel nach Anspruch 1, **dadurch gekennzeichnet, dass** die Folie im getrockneten Zustand eine Festigkeit von mindestens 20 N/mm² aufweist.

3. Beschichtungsmittel nach einem der Ansprüche 1 oder 2, **dadurch gekennzeichnet, dass** das organische Lösungsmittel im folienbildenden Beschichtungsmittel in einer Konzentration von 1 bis 12 % w/w enthalten.

4. Beschichtungsmittel nach einem der Ansprüche 1 bis 3, **dadurch gekennzeichnet, dass** es weiters ein Trennmittel aus der Gruppe umfassend mehrwertige Alkohole, synthetische Trennmittel, und Tenside, sowie Kombinationen hiervon, enthält.

5. Beschichtungsmittel nach einem der Ansprüche 1 bis 4, **dadurch gekennzeichnet, dass** es weiters ein Entschäumungsmittel enthält.

6. Beschichtungsmittel nach einem der Ansprüche 1 bis 5, **dadurch gekennzeichnet, dass** es weiters ein Korrosionsschutzmittel enthält.

7. Beschichtungsmittel nach einem der Ansprüche 1 bis 6, **dadurch gekennzeichnet, dass** es weiters Pigmente enthält.

8. Beschichtungsmittel nach einem der Ansprüche 1 bis 7, **dadurch gekennzeichnet, dass** die Polymer-Dispersion eine Kombination von mindestens zwei Polymer-Dispersionen ist.

9. Beschichtungsmittel nach einem der Ansprüche 1 bis 8, **dadurch gekennzeichnet, dass** es geeignete natürliche oder synthetische Repellents, wie ätherische Öle, Pflanzenextrakte wie ein Extrakt aus Plectranthus Caninus oder synthetische Repellents wie Ammoniumalaun (Aluminiumammoniumsulfat-Dodecahydrat, umfaßt.

10. Verwendung des Beschichtungsmittels nach einem der Ansprüche 1 bis 9 für die Beschichtung von Mauerwerk zum Schutz vor Verschmutzung.

11. Verwendung des Beschichtungsmittels nach Anspruch 9 für die Beschichtung von Mauerwerk zur Vergrämung von felltragenden Säugetieren.

## Claims

1. Film-forming coating agent on the basis of a polymer dispersion having a water content of at least 10% by weight and having an organic solvent content of 1 to 15% by weight, which in a dried state forms a film having a tensile bond strength of at least 0.1 N/mm², preferably at least 0.5 N/mm², and a vapor permeability of less than or equal to 25 µ, wherein in addition said film is mechanically removable, **characterized in that** the organic solvent is a polar solvent having a boiling point between 50 and 85°C and is selected from the group comprising ethanol, methyl ethyl ketone (butanone), 2-propanol (isopropyl alcohol), 2-methyl-2-propanol (tert-butanol), ethylene glycol dimethyl ether, and optionally mixtures thereof.

2. Coating agent according to claim 1, **characterized in that** the film has a strength of at least 20 N/mm² in its dried state.

3. Coating agent according to any one of claims 1 or 2, **characterized in that** the organic solvent is contained in the film-forming coating agent at a concentration of 1 to 12% w/w.

4. Coating agent according to any one of claims 1 to 3, **characterized in that** it further contains a separating agent selected from the group comprising polyvalent alcohols, synthetic separating agents, surfactants, and combinations thereof.

5. Coating agent according to any one of claims 1 to 4, **characterized in that** it further contains a defoaming agent.

6. Coating agent according to any one of claims 1 to 5, **characterized in that** it further contains a corrosion inhibitor.

7. Coating agent according to any one of claims 1 to 6, **characterized in that** it further contains pigments.

8. Coating agent according to any one of claims 1 to 7, **characterized in that** the polymer dispersion is a combination of at least two polymer dispersions.

9. Coating agent according to any one of claims 1 to 8, **characterized in that** it contains suitable natural or synthetic repellents, such as essential oils, plant extracts such as an extract of Plectranthus Caninus, or synthetic repellents such as ammonium alum (aluminum ammonium sulfate dodecahydrate).

10. Use of the coating agent according to any one of claims 1 to 9 for coating masonry to provide contamination protection.

11. Use of the coating agent according to claim 9 for coating masonry to deter fur-bearing mammals.

## Revendications

1. Composition de revêtement filmogène, à base d'une dispersion de polymères ayant une teneur en eau d'au moins 10 % en poids et une teneur en solvant organique de 1 à 15% en poids, qui à l'état sec forme une feuille ayant une résistance à l'adhérence par traction d'au moins 0,1 N/mm², de préférence d'au moins 0,5 N/mm², et une perméabilité à la vapeur inférieure ou égale à 25 µ, lequel film pouvant en outre être mécaniquement séparé, **caractérisée en ce que** le solvant organique est un solvant polaire ayant un point d'ébullition compris entre 50 et 85°C et est choisi dans le groupe comprenant l'éthanol, la méthyléthylcétone (butanone), le 2-propanol (alcool isopropylique), le 2-méthyl-2-propanol (tert-butanol) et l'éther diméthylique de l'éthylèneglycol, ainsi qu'éventuellement les mélanges de ceux-ci.

2. Composition de revêtement selon la revendication 1, **caractérisée en ce que** le film à l'état sec présente une résistance mécanique d'au moins 20 N/mm².

3. Composition de revêtement selon l'une des revendications 1 ou 2, **caractérisée en ce que** le solvant organique est contenu dans la composition de revêtement filmogène à une concentration de 1 à 12 % p/p.

4. Composition de revêtement selon l'une des revendications 1 à 3, **caractérisée en ce qu'**elle contient en outre un agent anti-adhérent du groupe comprenant les polyalcools, des agents anti-adhérents synthétiques et les tensioactifs, et ainsi que les combinaisons de ceux-ci.

5. Composition de revêtement selon l'une des revendications 1 à 4, **caractérisée en ce qu'**elle contient en outre un agent antimoussant.

6. Composition de revêtement selon l'une des revendications 1 à 5, **caractérisée en ce qu'**elle contient en outre un agent de protection contre la corrosion.

7. Composition de revêtement selon l'une des revendications 1 à 6, **caractérisée en ce qu'**elle contient en outre des pigments.

8. Composition de revêtement selon l'une des revendications 1 à 7, **caractérisée en ce que** la dispersion de polymères est une combinaison d'au moins deux dispersions de polymères.

9. Composition de revêtement selon l'une des revendications 1 à 8, **caractérisée en ce qu'**elle comprend des répulsifs naturels ou synthétiques appropriés tels que des huiles essentielles, des extraits de plantes tels que l'extrait de Plectranthus caninus ou des répulsifs synthétiques tels que l'alun d'ammonium (sulfate d'aluminium et d'ammonium dodécahydraté).

10. Utilisation de la composition de revêtement selon l'une des revendications 1 à 9 pour revêtir une maçonnerie dans le but de la protéger des salissures.

11. Utilisation de la composition de revêtement selon la revendication 9 pour le revêtement d'une maçonnerie dans le but d'effaroucher les mammifères à fourrure.
